# EUROPEAN PATENT SPECIFICATION

(11) **EP 2 522 054 B1**
(45) Date of publication and mention of the grant of the patent: **24.08.2016**
(21) Application number: 09812491.0
(22) Date of filing: 30.11.2009
(51) Int. Cl.: H01R 13/52, H01R 13/502, F16J 15/32, G02B 6/38

(54) **SEAL, SYSTEM AND CONNECTOR ASSEMBLY COMPRISING SUCH A SEAL, METHODS OF ASSEMBLY AND OF MANUFACTURE**
DICHTUNG, SYSTEM UND VERBINDERANORDNUNG MIT EINER DERARTIGEN DICHTUNG, MONTAGE- UND HERSTELLUNGSVERFAHREN
JOINT D'ÉTANCHÉITÉ, SYSTÈME ET ENSEMBLE DE CONNECTEUR COMPRENANT UN TEL JOINT, PROCÉDÉS D'ASSEMBLAGE ET DE FABRICATION

(43) Date of publication of application: 14.11.2012
(73) Proprietor: Delphi International Operations Luxembourg S.à r.l., 4940 Bascharage (LU)
(72) Inventor: GUILLANTON, Erwan, 28130 Maintenon (FR); SCHMITT, Gilles, 28210 Senantes (FR)
(74) Representative: Delphi France SAS
(86) International application number: PCT/IB2009/056021
(87) International publication number: WO 2011/064628

(56) References cited:
- WO-A1-2009/136221
- DE-A1- 10 348 576
- JP-A- 2004 039 418
- US-A- 5 328 382
- US-A- 5 492 487
- US-A- 5 782 657
- US-A1- 2002 113 378
- US-A1- 2009 215 298

## Description

### FIELD OF THE INVENTION

The invention relates to seals for connectors, such connectors, for instance electrical, optical or electro-optical connectors, and their assemblies, and methods of manufacturing and assembling such seals and connector assemblies.

### BACKGROUND OF THE INVENTION

Connectors are notably used for connecting an electrical, optical or electro-optical apparatus to another, and can be found in any kind of electrical, optical or electro-optical devices. Such connectors can for example be of the type comprising an electrically insulator housing in which electrical wires or optical fibres are inserted. In this document, electrical connectors are taken as examples, but the one skilled in the art will easily transpose these examples into connectors for optical or electro-optical applications.

Since it is undesirable that foreign bodies, such as dust and liquids, penetrate in the connectors, it is preferable to seal the connectors against such foreign bodies. It has been known to provide a so-called "interfacial" seal, i.e. a seal which will be placed between the two connectors to be assembled. Thus, unwanted penetration of material through the interface between the two connectors is prevented.

An example of an interfacial joint is given in JP2006-344475, US5492487 or JP2004-39418.

Recently, higher sealing efficiency has been required from interfacial joints. This means that the electrical connectors are submitted to very demanding validation tests. For example, one such test requires the seal to keep a given level of sealing, after the connector assembly has been maintained in a controlled atmosphere with stepwise increasing temperature, up to more than 160°C, for days. Because the materials of the seal and that of the housing behave differently under heat, during such a test, the material of the seal will be caused to expand more than that of the surrounding housing. This expansion may cause a pressure on the housing and consequently a permanent deformation to this housing. After the test, the seal will revert back toward its original shape, but not the housing, and the sealing efficiency will be impaired.

Since the connectors are likely to be submitted to high relative displacements at the interface, in particular when tilting one connector respective to one another, maintaining sealing at this location is a challenge. Hence, it was an object of the invention to make the sealing efficiency of the interfacial seal compatible with more demanding operating conditions, without not adversely affecting the ease of assembly of the connectors, nor the cost of the product.

### SUMMARY OF THE INVENTION

To this aim, it is provided a seal for an electrical, optical, or opto-electrical connector assembly. The seal is shaped as a thin profiled member. It is made of an elastomeric material.

It comprises a base having an inner profiled surface, which will be mounted surrounding a first connector housing.

It comprises at least one lip. The lip projects outward from the base and has an outer profiled surface, opposed to the inner surface. The outer profiled surface will be in contact with a second connector housing. The outer profiled surface comprises two faces which taper to a lip edge.

An internal angle, in cross-section, between these two faces is between 60° and 120°.

A ratio between a thickness of the lip and a thickness of the seal is between 0.5 and 0.7.

Surprisingly, tests (such as, for example, tests on samples and simulations) showed that such rather stout lips gave the best compromise for interfacial joints.

One of the features of the seal according to the invention relates to the quantity of elastomeric material forming the seal compared to the compression and elongation properties of the seal. Indeed, elastomeric materials such as silicones may have a greater thermal expansion than plastic housings of the connectors. Further, on the one hand, seals of elastomeric materials may come back to their initial shape, or close to their initial shape, after cooling down. On the other hand, plastic housings may remain more deformed, even after cooling down. Consequently, the one skilled in the art would be lead to limit the compression of the seal when the connector and the counterconnector are mated and/or the elongation of the seal when mounted on the connector and/or limit the quantity of elastomeric material of the seal so as to reduce the expansion effects. Counter-intuitively the applicant designed the seal according to the invention so as to have a rather large amount of elastomeric material compared to the size of the connector and the size of the interfacial gap to be sealed between the connector and the counterconnector to be mated with.

Then preferentially, the compression of the seal between its state at rest (not mounted on the connector) and its state once mounted on the connector and compressed by the counterconnector is at least of 10%, so as to press significantly the lips. Such a compression ratio provides a rather good sealing between the seal and the surface of the counterconnector mated with the connector on which it is mounted.

Preferentially, the seal undergoes a 10% elongation when mounted on the connector. Such an elongation provides a rather good sealing on the internal surface of the seal (i.e. the surface on which it is mounted).

Preferentially, the seal has a perimeter which is in a range of 30-80 mm. Indeed, the ratios and percentages above defined are better for relatively small connectors. The above defined ratio between the thickness of the lip and the thickness of the seal determines a rather stout seal profile compared to the size of the seal.

For instance, the seal has a 38mm perimeter.

For a polygonal seal, such as a rectangular one, the ratio of the internal length over the internal width is preferentially between about 1 and 3.5. Indeed, if the length is too high compared to the width, the sealing properties of the housing side corresponding to the width will much more deteriorate during thermal cycles. For instance, the length is comprised between 10 and 30 mm and the width is comprised between 5 and 15 mm.

Optionally, the internal angle of the lips will be chosen between 70° and 90°, preferably 80°.

Optionally, the ratio of thicknesses is about 0.6.

A suitable material for the seal is silicone.

Optionally, the seal has one, two, three or more lips. These lips might be identical in geometry.

The inner profiled surface comprises a straight portion, and one rib which projects inward from the straight portion. This internal rib is useful to improve the sealing ability of the seal. This rib is level with the lip.

Optionally, the seal has, in its main plane, a polygonal profile.

Optionally, the lips are symmetrical, relatively to a plane which is parallel to the main plane.

### BRIEF DESCRIPTION OF THE DRAWINGS

Other characteristics and advantages of the invention will appear from the following description of five of its embodiments, provided as non-limitative examples, and of the accompanying drawings.

On the drawing :
- Fig. 1 is an exploded perspective view of a connector assembly,
- Fig. 2 is a sectional view along line II-II of Fig. 1,
- Fig. 3 is a perspective view of an interfacial seal of the connector assembly of Figs. 1 and 2, according to a first embodiment,
- Fig. 4 is a partial sectional view taken along lines II- II of Fig. 1, of the seal of Fig. 3,
- Figs. 5a and 5b are sectional partial views respectively before and after assembly of the connector assembly of Fig. 1,
- Figs. 6 to 9 are views corresponding to Fig. 4, of other seals not part of the present invention.

On the different Figures, the same reference signs designate like or similar elements.

### DETAILED DESCRIPTION

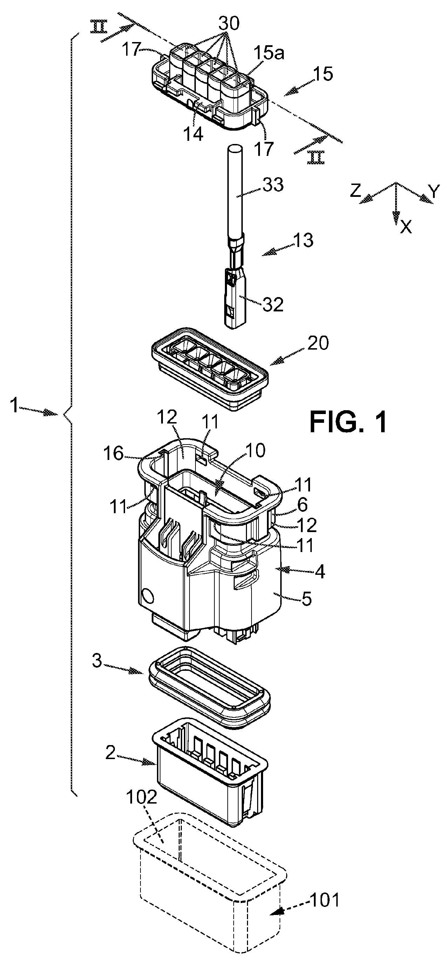

Fig. 1 shows an electrical connector 1 to be connected to a mating connector (schematically shown in dotted lines as 101). The direction X corresponds to the direction of mating the connector 1 with the complementary connector 101. The two other directions Y and Z are transverse to the direction X. In case of parts having a substantially rectangular cross-section, such as shown, the direction Y and Z could for example be the directions of such rectangle with, for example, Y being the direction of the length of the rectangle, and Z of its width. These definitions are not intended to be limitative of the invention, but only to help the description of an embodiment of the invention.

The expressions upward, downward, upper, lower, transverse, etc... are defined with respect to this longitudinal direction X, unless it is obvious from the description that these terms locally have another meaning.

The electrical connector 1 comprises a housing comprising a housing portion 4, a front grid 2 and a rear grid 15, all made of a dielectric thermoplastic material. An interfacial joint 3, which will be described in more details below, is mounted in the connector, to be interposed between the housing body 4 and the mating connector 101 for sealing this connection. The seal 3 is for example made of a silicone having a hardness within a range of 20-60 on the shore-A scale, as measured using the following standard: DIN EN ISO808. The mating connector 101 comprises a housing portion 102 designed to compress the seal.

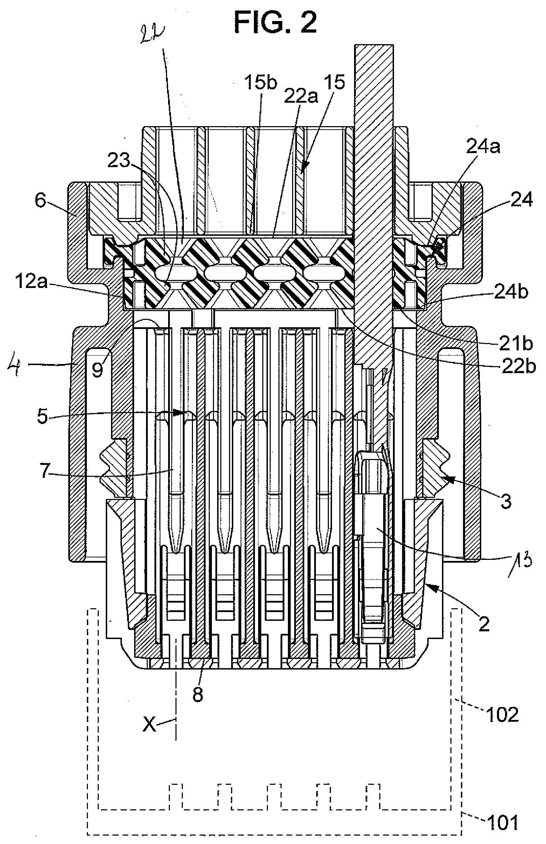

The front grid 2 is locked to the front mating end of the housing body before assembly of the connector 1 to the mating connector 101. The housing portion (or body) 4 comprises a front connection portion 5 and a back portion 6. The connection portion 5 comprises a plurality of pathways 7 (visible on Fig. 2) extending for example along the longitudinal direction X between a front face 8, which is a mating face with the mating connector, and a back face 9. The pathways are shaped to receive electrical terminals 13 which will be described in more details below.

The back portion 6 partly encloses a receiving space 10 (Fig. 1) for a mat sealing joint 20 of any suitable type of material.

The connector 1 further comprises a mat sealing joint 20. Such a mat sealing joint is suitable for sealing the connector against water and/or dust at its interface with electrical terminals 13. It is for example made of an elastically deformable elastomeric polymer material, such as some suitable silicones.

As shown on Fig.2, the mat sealing joint 20 comprises, seen from the side, a plurality of pathways 22 extending for example along the longitudinal direction X, from an upper surface 22a to a lower surface 22b. Each of the pathways 22 corresponds to a pathway 7 of the housing body, for receiving an electrical terminal 13. As it is visible for example on Fig. 2, the pathways 22 have an internal cross-sectional shape designed for sealing around wires of the electrical terminals 13, comprising for example two ribs 23 of reduced diameter and of suitable geometry, and possibly an internal membrane (not shown) to be torn upon insertion of the electrical terminal 13.

An outer portion 24 of the mat sealing joint is designed to provide peripheral sealing with the housing body 4 and rear grid 15.

Referring back to Fig. 1, the connector 1 further comprises a rear grid 15. The grid 15 comprises a plurality of pathways 30, each one of which extending for example along the longitudinal direction X between an upper face 15a and an opposite lower face 15b (Fig. 2), and each one of which corresponding to a respective pathway 22 of the mat sealing joint 20 and a respective pathway 7 of the housing body 4.

The grid 15 may further comprise guiding features 17 (Fig. 1) such as ribs complementary to grooves 16 of the housing.

The grid 15 may further comprise locking features 14 such as elastic tongues complementary to openings 11 of the housing body 4 and adapted to be deformed upon insertion of the grid in the housing body, and to spring back into the openings 11 to lock the grid to the housing body.

The connector 1 is shaped to receive electrical terminals 13 which are classically comprised of an electrical terminal member 32 connected to, for example by crimping, a wire 33 (Fig. 1). Only one such terminal is shown on Fig. 1. In the assembled state, the electrical terminal member 32 is located in a corresponding pathway 7 of the housing, while the wire 33 extends through the corresponding pathway 22 of the mat sealing joint 20 and through the corresponding pathway 30 of the grid. For example, the longitudinal direction X referred to above and below also corresponds to the longitudinal direction of extension of the wire 33 at least in the mat sealing joint 20, from the grid side to the housing body side.

When the electrical terminal 13 is introduced into the connector 1, the sealing ribs 23 are compressed onto the external surface of the wire 33 so as to achieve efficient sealing of the wire 33 (Fig. 2).

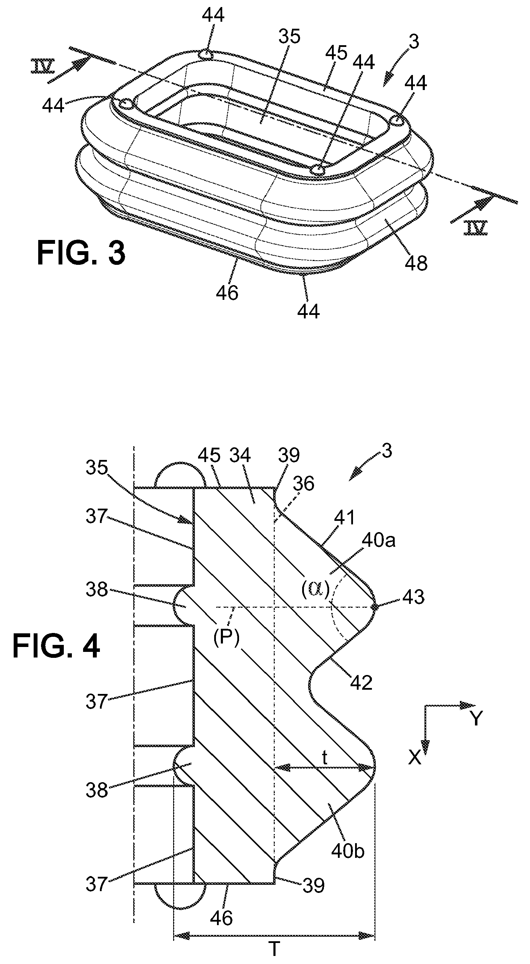

The interfacial seal 3 will now be described in more detail by reference to Figs. 3 and 4, according to a first embodiment. The present description is that of the seal at rest before being mounted to any connector housing.

As shown on Fig. 3, this seal 3 is designed as a profiled ring designed to surround the housing body 4. The ring can have any kind of geometry, such as circular, polygonal (in the present case, rectangular)... By "profiled" it is meant that the cross section taken transversal to the peripheral direction of the seal is substantially identical all along this periphery. In the present example, sections in the X-Y and in the X-Z planes are concerned. Of course, local arrangements of the shape could be provided, in order to accommodate local geometric features of the housing body, for example. Other local arrangements include, such as in the present case of a substantially polygonal seal, each corner.

The seal is manufactured with an internal perimeter which is smaller than the external perimeter of the housing where it has to be mounted. Preferentially, this internal perimeter is 10% smaller than this external perimeter of the housing. Preferentially, the seal has a perimeter which is in a range of 30-80 mm. For instance, the seal has a 38mm perimeter.

As will be seen in particular on Fig. 4, the interfacial joint 3 comprises a base 34 which extends between an inner surface 35 and an artificial line 36 virtually represented by dotted lines 36 on Fig. 4. According to this embodiment, the inner surface 35 is profiled and has a substantially straight portion 37 from which ribs 38 project radially inward. For example, the ribs have a semi-circular cross section with a 0.2 mm radius. The line 36 is arbitrarily represented as a line parallel to the straight portion 37 of the surface 35, between the shoulders 39 of the joint 3. However, it would be possible to define the line 36 in other suitable ways, such as in particular, lines parallel to the straight portion 37, but located more radially inward than the one shown on Fig. 4. Currently, the base portion 34 is defined as the thickest part of the joint 3 extending over the whole height of the seal from the inner surface 35 outward.

Two lips 40a, 40b project from the base 34 outward. Although the present embodiment comprises two such lips, it is contemplated to use only one lip, in variant embodiments, or more than two lips, for example three lips. The number of lips depends mainly on the space available for the seal along X direction. In this first embodiment, the two lips 40a and 40b have the same geometry. However, in case of embodiments with a plurality of lips, this is not compulsory.

In cross-section, each lip has a substantially triangular shape having one side internal to the seal, which is joined to the base 34, and two other sides 41 and 42 which are parts of the outer surface 48 of the seal. The two faces 41 and 42 taper to a lip edge 43 which can be slightly rounded, as shown, and which is the most outward part of the seal. Further, in the present example, the two faces 41 and 42 are partly symmetrical with respect to a plane (P) comprising the Y and Z directions, and passing through the lip edge 43.

It should be noted that, in the present embodiment, this plane (P) passes also through the middle of the rib 38. Hence, the lip 43 and a corresponding rib 38 are located at the same height level of the seal.

The included angle α between the two faces 41 and 42 in the present embodiment is 80°. Simulations and tests showed that a good sealing ability is obtained when this angle is between 60° and 120°, and preferably between 70° and 90°.

When the angle α is too high above this limit, insertion of the mating connector needs an increased force, which might lead to a connection failure.

When the angle α is too low, there is a risk of bending the lip in the X-Y plane upon insertion of the mating connector. In such case, sealing is improperly performed, mainly by the surface 42, and there is a risk of not reaching the sealing requirement.

One of the factors which influence the sealing ability of the seal is the ratio of the thickness t of the lip to the thickness T of the seal. The thicknesses are measured along the Y direction. The thickness of a lip is defined as the largest measure along direction Y, between the imaginary line 36 and the point of the lip which is the most outward. The thickness T of the joint is the largest dimension measured along direction Y between the inner surface 35 and the outer surface of the lip. The thickness T is measured at rest when the seal in not mounted on the connector. In the present embodiment, the ratio t/T is about 0.6. Tests and simulations show that interesting results are obtained for a ratio taken between 0.5 and 0.7.

If the ratio rises above this limitation, insertion of the mating connector needs an increased force, which might lead to a connection failure.

When this ratio is too low, there is a risk of loss of adherence of the internal face 35 of the seal to the corresponding face of the housing body 4, when the housing body 4 is submitted to tilting in the X-Y plane, respective to the housing of the mating connector 101, and therefore an increased risk of losing the sealing ability of the seal.

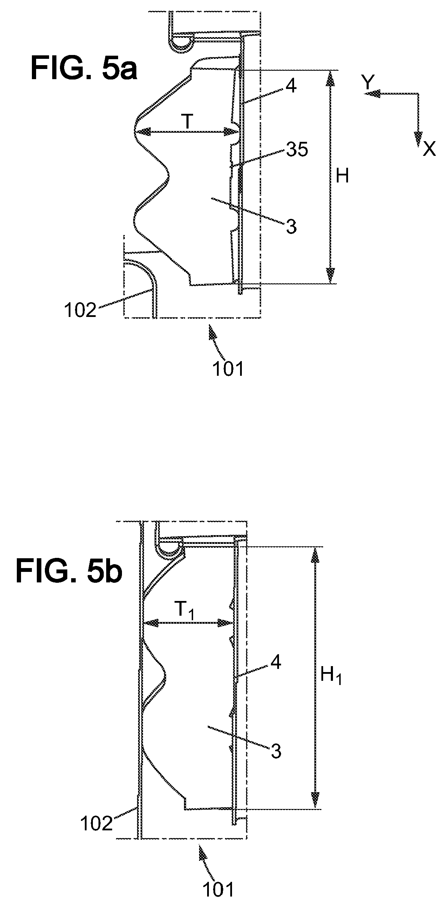

Figs. 5a and 5b show details of the assembly of the connector system. As visible on Fig. 5a, an electrical connector is assembled by providing a housing body 4 and mounting the inner surface 35 of the interfacial seal 3 on the housing. After that, the front grid 2 can be mechanically locked to the housing body 4 (this step is not visible on Fig. 5a, but can be understood from Fig. 2). Hence, the housing body 4 and the front grid 2 together form a recess of a U-shaped cross section, to receive the interfacial seal 3. As visible on Fig. 3, projections 44 protrude from the top face 45 and/or the bottom face 46 of the seal to interact with the wings of this U-shaped recess. For example, such projections 44 are provided at each corner of the polygonal seal 3. There isn't necessarily a compression of the seal along direction X between the housing body 4 and the front grid 2. However, in particular in case ribs 38 are provided in the internal face of the seal, some level of radial compression along the Y or Z direction can already occur.

This connector is assembled to the mating connector 101 by applying a translating movement, mainly along direction X, of one of the connectors toward the other. In the assembled state (Fig. 5b), the mating connector 101 and the connector 1 are mechanically locked by any suitable means. Hence, the geometry taken by the seal in the assembled condition of the assembly is defined by the respective geometries of the rigid parts which surround the seal, and by the properties of the material of the seal 3, as well as its geometry. The seal is compressed between the housing portions 4 and 102 of the respective connectors.

The ratio of the thickness T1 in the sealing condition (assembled condition) of the joint to the thickness T of the seal at rest is less than 0.9. Both thicknesses are defined as above.

Further, the ratio H1 of the height of the seal in the sealing condition to the height H at rest is at least 1.1. The height is measured between the two most distant points of the seal along the X direction (not taking into account the protrusions 44).

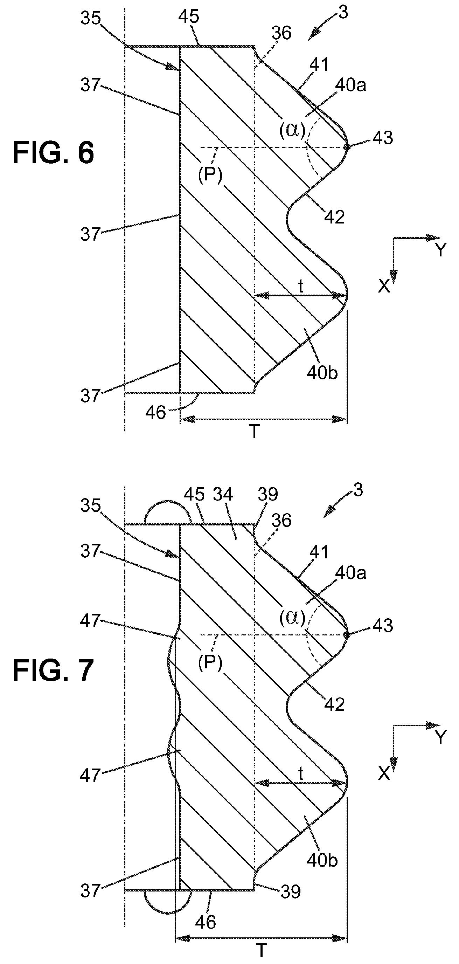

Another exemplary seal not part of the present inventions is shown on Fig. 6 , which does not have any rib 38, nor a shoulder portion 39. Hence, the face 41 of the top most lip 40a directly merges with the top surface 45. The face 42 of the bottommost lip 40b directly merges with the bottom surface 46.

Fig. 7 now shows another exemplary seal not part of the present invention, which differs in that the ribs 38 are replaced by waves 47 on all or part of the height of the seal 3. Any suitable number of waves could be used. In such case, the thickness of the seal is still measured as the largest dimension along direction Y from the inner to the outer surfaces of the seal.

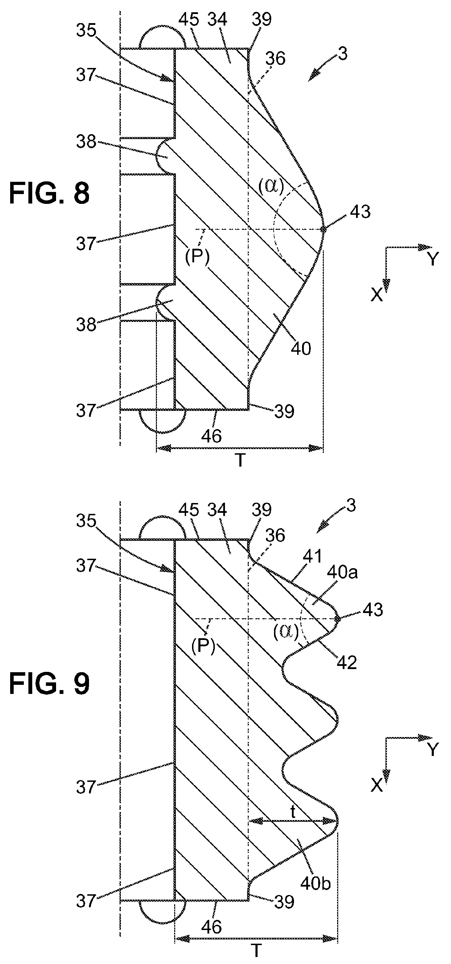

Fig. 8 now shows another exemplary seal not part of the present invention, which differs in that it has only one lip 40 which has an included angle α of 120°. Of course, in variant embodiment, it would be possible to implement two or more ribs with such an internal angle α.

In this seal, it should be noted that the two ribs 38 are not level with the edge 43 of the lip. However, in a variant embodiment, not shown, it would be possible to provide a single rib 38 level with the lip edge 43, in accordance with the present invention.

Fig. 9 shows yet another exemplary seal not part of the present invention, which differs in that it has three lips, of included angle α chosen equal to 60°. However, value of the inclined angle and the number of lips are not necessarily correlated. This seal does not provide any rib 38, such as the embodiment of Fig. 6.

Features of different embodiments could be combined, when applicable, to form yet other embodiments in accordance with the present invention as defined in the claims.

## Claims

1. A seal for an electrical, optical, or opto-electrical connector assembly, the seal being shaped as a thin profiled member and made of an elastomeric material, and comprising:
- a base (34) having an inner profiled surface (35), adapted to be mounted surrounding a first connector housing, the inner profiled surface comprising a straight portion (37),
- at least one rib (38) projecting inward from the straight portion (37), and
- at least one lip (40a, 40b), projecting outward from the base, the lip (40a, 40b) being level with said at least one rib (38) and having an outer profiled surface (48) adapted to be in contact with a second connector housing, and opposed to the inner surface, said outer profiled surface comprising two faces (41, 42) which taper to a lip edge (43), wherein an internal angle (α) in cross-section, between said two faces is between 60° and 120°, and
**characterized in that**
a ratio between a thickness (t) of the lip and a thickness (T) of the seal is between 0.5 and 0.7.

2. Seal according to claim 1, wherein said internal angle is between 70° and 90°.

3. Seal according to claim 1 or 2, wherein said internal angle is 80°.

4. Seal according to any of claims 1 to 3, wherein said ratio is 0.6.

5. Seal according to any of claims 1 to 4, wherein the seal is made of silicone.

6. Seal according to any of claims 1 to 5, comprising at least two said lips (40a, 40b).

7. Seal according to claim 6, wherein said lips have identical geometry.

8. Seal according to any of claims 1 to 7, with a polygonal profile. 8

9. Seal according to any of claims 1 to 8, wherein the two faces (41, 42) of each lip are symmetrical with respect to a symmetry plane (P) passing through the lip edge.

10. An electrical connector comprising a housing portion (4), and comprising a seal (3) according to any of claims 1 to 9, the inner profiled surface being mounted to surround said housing portion (4).

11. A connector assembly comprising:
- a first electrical connector (1) comprising a first housing portion (4), and a seal (3) according to any of claims 1 to 9, the inner profiled surface being mounted to surround said first housing portion,
- a second electrical connector (101) comprising a second housing portion,
said lip (40a, 40b) being in contact with the second housing portion,
said seal being in a sealing condition where it provides sealing,
a height (H1) of the seal in the sealing condition being at least 1.1 times a height (H) of said seal at rest.

12. A connector assembly comprising:
- a first electrical connector (1) comprising a first housing portion (4), and a seal (3) according to any of claims 1 to 9, the inner profiled surface being mounted to surround said first housing portion,
- a second electrical connector (101) comprising a second housing portion,
said lip being in contact with the second housing portion,
said seal being in a sealing condition where it provides sealing,
a thickness (T1) of the seal in the sealing condition being at most 0.9 times a thickness (T) of said seal at rest.

13. A connector assembly comprising:
- a first electrical connector (1) comprising a first housing portion (4), and a seal (3), according to any one of claims 1 to 9 the inner profiled surface being mounted to surround said first housing portion,
- a second electrical connector (101) comprising a second housing portion,
said lip (40a, 40b) being in contact with the second housing portion,
said seal being in a sealing condition where it provides sealing,
at least one of the following features being satisfied :
- a height (H1) of the seal in the sealing condition being at least 1.1 times a height (H) of said seal at rest ;
- a thickness (T1) of the seal in the sealing condition being at most 0.9 times a thickness (T) of said seal at rest.

14. A method of manufacturing a seal for an electrical, optical, or opto-electrical connector assembly, the method comprising shaping the seal from an elastomeric material as a thin profiled member comprising:
. a base (34) having an inner profiled surface (35), adapted to be mounted surrounding a first connector housing, the inner profiled surface comprising a straight portion (37),
. at least one rib (38) projecting inward from the straight portion (37), and
- at least one lip (40a, 40b), projecting outward from the base, the lip (40a, 40b) being level with said at least one rib (38) and having an outer profiled surface (48) adapted to be in contact with a second connector housing, and opposed to the inner surface, said outer profiled surface comprising two faces (41, 42) which taper to a lip edge (43), wherein an internal angle (α), in cross-section, between said two faces is between 60° and 120°, and
**characterized in that**
a ratio between a thickness (t) of the lip and a thickness (T) of the seal is between 0.5 and 0.7.

15. A method of assembling an electrical connector comprising:
- providing a housing portion (4),
- providing a seal (3) according to any of claims 1 to 9,
- mounting the inner profiled surface (35) to surround said housing portion (4).

16. A method of connecting a connector assembly comprising:
- providing a first electrical connector (1) comprising a first housing portion, and having a seal according to any of claims 1 to 9, the inner profiled surface (35) being mounted to surround said first housing portion (4),
- providing a second electrical connector (101) comprising a second housing portion (102),
- assembling said connectors to place the seal in a sealing condition where it provides sealing, where said lip (40a, 40b) is in contact with the second housing portion (102),
wherein one or more of the following features is satisfied:
- a thickness of the seal in the sealing condition is at most 0.9 times a thickness of said seal at rest,
- a height of the seal in the sealing condition being at least 1.1 times a height of said seal at rest.

## Patentansprüche

1. Eine Dichtung für eine elektrische, optische oder opto-elektrische Verbinderanordnung, wobei die Dichtung als ein dünnes Profilelement geformt ist und aus einem elastomeren Material besteht und aufweist:
- eine Basis (34) mit einer inneren Profilfläche (35), die ausgebildet ist, ein erstes Verbindergehäuse umgebend angebracht zu werden, wobei die innere Profilfläche einen geraden Teil (37) aufweist,
- zumindest eine Rippe (38), die von dem geraden Teil (37) nach innen ragt, und
- zumindest eine Lippe (40a, 40b), die von der Basis nach außen ragt, wobei die Lippe (40a, 40b) mit der zumindest einen Rippe (38) auf gleicher Höhe ist und eine äußere Profilfläche (48) hat, die ausgebildet ist, in Kontakt mit einem zweiten Verbindergehäuse zu sein, und gegenüber der Innenfläche ist, wobei die äußere Profilfläche zwei Flächen (41, 42) aufweist, die sich zu einem Lippenrand (43) verjüngen, wobei ein Innenwinkel (α) im Querschnitt zwischen den zwei Flächen zwischen 60° und 120° ist, und **dadurch gekennzeichnet, dass** ein Verhältnis zwischen einer Dicke (t) der Lippe und einer Dicke (T) der Dichtung zwischen 0,5 und 0,7 ist.

2. Dichtung gemäß Anspruch 1, wobei der Innenwinkel zwischen 70° und 90° ist.

3. Dichtung gemäß Anspruch 1 oder 2, wobei der Innenwinkel 80° ist.

4. Dichtung gemäß einem der Ansprüche 1 bis 3, wobei das Verhältnis 0,6 ist.

5. Dichtung gemäß einem der Ansprüche 1 bis 4, wobei die Dichtung aus Silikon besteht.

6. Dichtung gemäß einem der Ansprüche 1 bis 5, die zumindest zwei der Lippen (40a, 40b) aufweist.

7. Dichtung gemäß Anspruch 6, wobei die Lippen eine identische Geometrie haben.

8. Dichtung gemäß einem der Ansprüche 1 bis 7, mit einem polygonalen Profil.

9. Dichtung gemäß einem der Ansprüche 1 bis 8, wobei die zwei Flächen (41, 42) jeder Lippe symmetrisch sind in Bezug auf eine Symmetrieebene (P), die durch den Lippenrand geht.

10. Ein elektrischer Verbinder, der einen Gehäuseteil (4) aufweist und eine Dichtung (3) gemäß einem der Ansprüche 1 bis 9 aufweist, wobei die innere Profilfläche angebracht ist, um den Gehäuseteil (4) zu umgeben.

11. Eine Verbinderanordnung, die aufweist:
- einen ersten elektrischen Verbinder (1), der einen ersten Gehäuseteil (4) und eine Dichtung (3) gemäß einem der Ansprüche 1 bis 9 aufweist, wobei die innere Profilfläche den ersten Gehäuseteil umgebend angebracht ist,
- einen zweiten elektrischen Verbinder (101), der einen zweiten Gehäuseteil aufweist,
wobei die Lippe (40a, 40b) in Kontakt mit dem zweiten Gehäuseteil ist,
wobei die Dichtung in einem Dichtungszustand ist, in dem sie eine Abdichtung vorsieht,
wobei eine Höhe (H1) der Dichtung in dem Dichtungszustand zumindest das 1,1-fache einer Höhe (H) der Dichtung in Ruhe ist.

12. Eine Verbinderanordnung, die aufweist:
- einen ersten elektrischen Verbinder (1), der einen ersten Gehäuseteil (4) und eine Dichtung (3) gemäß einem der Ansprüche 1 bis 9 aufweist, wobei die innere Profilfläche den ersten Gehäuseteil umgebend angebracht ist,
- einen zweiten elektrischen Verbinder (101), der einen zweiten Gehäuseteil aufweist,
wobei die Lippe in Kontakt mit dem zweiten Gehäuseteil ist,
wobei die Dichtung in einem Dichtungszustand ist, in dem sie eine Abdichtung vorsieht,
wobei eine Dicke (T1) der Dichtung in dem Dichtungszustand höchstens das 0,9-fache einer Dicke (T) der Dichtung in Ruhe ist.

13. Eine Verbinderanordnung, die aufweist:
- einen ersten elektrischen Verbinder (1), der einen ersten Gehäuseteil (4) und eine Dichtung (3) gemäß einem der Ansprüche 1 bis 9 aufweist, wobei die innere Profilfläche den ersten Gehäuseteil umgebend angebracht ist,
- einen zweiten elektrischen Verbinder (101), der einen zweiten Gehäuseteil aufweist,
wobei die Lippe (40a, 40b) in Kontakt mit dem zweiten Gehäuseteil ist,
wobei die Dichtung in einem Dichtungszustand ist, in dem sie eine Abdichtung vorsieht,
wobei zumindest eines der folgenden Merkmale erfüllt ist:
- eine Höhe (H1) der Dichtung in dem Dichtungszustand ist zumindest das 1,1-fache einer Höhe (H) der Dichtung in Ruhe;
- eine Dicke (T1) der Dichtung in dem Dichtungszustand ist höchstens das 0,9-fache einer Dicke (T) der Dichtung in Ruhe.

14. Ein Verfahren zur Herstellung einer Dichtung für eine elektrische, optische oder opto-elektrische Verbinderanordnung, wobei das Verfahren aufweist ein Formen der Dichtung aus einem elastomeren Material als ein dünnes Profilelement, aufweisend:
. eine Basis (34) mit einer inneren Profilfläche (35), die ausgebildet ist, ein erstes Verbindergehäuse umgebend angebracht zu werden, wobei die innere Profilfläche einen geraden Teil (37) aufweist,
. zumindest eine Rippe (38), die von dem geraden Teil (37) nach innen ragt, und
- zumindest eine Lippe (40a, 40b), die von der Basis nach außen ragt, wobei die Lippe (40a, 40b) mit der zumindest einen Rippe (38) auf gleicher Höhe ist und eine äußere Profilfläche (48) hat, die ausgebildet ist, in Kontakt mit einem zweiten Verbindergehäuse zu sein, und gegenüber der Innenfläche ist, wobei die äußere Profilfläche zwei Flächen (41, 42) aufweist, die sich zu einem Lippenrand (43) verjüngen, wobei ein Innenwinkel (α) im Querschnitt zwischen den zwei Flächen zwischen 60° und 120° ist, und **dadurch gekennzeichnet, dass**
ein Verhältnis zwischen einer Dicke (t) der Lippe und eine Dicke (T) der Dichtung zwischen 0,5 und 0,7 ist.

15. Ein Verfahren zum Zusammenfügen eines elektrischen Verbinders, das aufweist:
- Vorsehen eines Gehäuseteils (4),
- Vorsehen einer Dichtung (3) gemäß einem der Ansprüche 1 bis 9,
- Anbringen der inneren Profilfläche (35), um den Gehäuseteil (4) zu umgeben.

16. Ein Verfahren zum Verbinden einer Verbinderanordnung, das aufweist:
- Vorsehen eines ersten elektrischen Verbinders (1), der einen ersten Gehäuseteil und eine Dichtung gemäß einem der Ansprüche 1 bis 9 aufweist, wobei die innere Profilfläche (35) den ersten Gehäuseteil (4) umgebend angebracht ist,
- Vorsehen eines zweiten elektrischen Verbinders (101), der einen zweiten Gehäuseteil (102) aufweist,
- Zusammenfügen der Verbinder, um die Dichtung in einen Dichtungszustand zu bringen, in dem sie eine Abdichtung vorsieht, wobei die Lippe (40a, 40b) in Kontakt mit dem zweiten Gehäuseteil (102) ist,
wobei eines oder mehrere der folgenden Merkmale erfüllt ist/sind:
- eine Dicke der Dichtung in dem Dichtungszustand ist höchstens das 0,9-fache einer Dicke (T) der Dichtung in Ruhe,
- eine Höhe der Dichtung in dem Dichtungszustand ist zumindest das 1,1-fache einer Höhe der Dichtung in Ruhe.

## Revendications

1. Joint pour un assemblage connecteur électrique, optique, ou opto-électrique, le joint ayant la forme d'un élément profilé mince et fabriqué en un matériau élastomère, et comprenant :
- une base (34) ayant une surface profilée intérieure (35), adaptée à être montée en entourant un premier boîtier de connecteur, la surface profilée intérieure comprenant une portion droite (37),
- au moins une nervure (38) qui se projette vers l'intérieur depuis la portion droite (37), et
- au moins une lèvre (40a, 40b), qui se projette vers l'extérieur depuis la base, la lèvre (40a, 40b) étant au même niveau que ladite au moins une nervure (38) et ayant une surface profilée extérieure (48) adaptée à être en contact avec un second boîtier de connecteur, et opposée à la surface intérieure, ladite surface profilée extérieure comprenant deux faces (41, 42) qui vont en se rétrécissant vers un bord de lèvre (43), dans lequel un angle intérieur (α), en section transversale, entre lesdites deux faces est entre 60° et 120°, et
**caractérisé en ce que**
un rapport entre une épaisseur (t) de la lèvre et une épaisseur (T) du joint est entre 0,5 et 0,7.

2. Joint selon la revendication 1, dans lequel ledit angle intérieur est entre 70° et 90°.

3. Joint selon la revendication 1 ou 2, dans lequel ledit angle intérieur est de 80°.

4. Joint selon l'une quelconque des revendications 1 à 3, dans lequel ledit rapport est de 0,6.

5. Joint selon l'une quelconque des revendications 1 à 4, dans lequel le joint est fabriqué en silicone.

6. Joint selon l'une quelconque des revendications 1 à 5, comprenant au moins deux desdites lèvres (40a, 40b).

7. Joint selon la revendication 6, dans lequel lesdites lèvres ont une géométrie identique.

8. Joint selon l'une quelconque des revendications 1 à 7, présentant un profil polygonal.

9. Joint selon l'une quelconque des revendications 1 à 8, dans lequel les deux faces (41, 42) de chaque lèvre sont symétriques par rapport à un plan de symétrie (P) passant par le bord de lèvre.

10. Connecteur électrique comprenant une portion de boîtier (4), et comprenant un joint (3) selon l'une quelconque des revendications 1 à 9, la surface profilée intérieure étant montée pour entourer ladite portion de boîtier (4).

11. Assemblage connecteur comprenant :
- un premier connecteur électrique (1) comprenant une première portion de boîtier (4), et un joint (3) selon l'une quelconque des revendications 1 à 9, la surface profilée intérieure étant montée pour entourer ladite première portion de boîtier,
- un second connecteur électrique (101) comprenant une seconde portion de boîtier,
ladite lèvre (40a, 40b) étant en contact avec la seconde portion de boîtier,
ledit joint étant dans une condition d'étanchement dans laquelle il assure un étanchement,
une hauteur (H1) du joint dans la condition d'étanchement étant au moins 1,1 fois une hauteur (H) dudit joint au repos.

12. Assemblage connecteur comprenant :
- un premier connecteur électrique (1) comprenant une première portion de boîtier (4), et un joint (3) selon l'une quelconque des revendications 1 à 9, la surface profilée intérieure étant montée pour entourer ladite première portion de boîtier,
- un second connecteur électrique (101) comprenant une seconde portion de boîtier,
ladite lèvre étant en contact avec la seconde portion de boîtier,
ledit joint étant dans une condition d'étanchement dans laquelle il assure un étanchement,
une épaisseur (T1) du joint dans la condition d'étanchement étant au plus 0,9 fois une épaisseur (T) dudit joint au repos.

13. Assemblage connecteur comprenant :
- un premier connecteur électrique (1) comprenant une première portion de boîtier (4), et un joint (3) selon l'une quelconque des revendications 1 à 9, la surface profilée intérieure étant montée pour entourer ladite première portion de boîtier,
- un second connecteur électrique (101) comprenant une seconde portion de boîtier,
ladite lèvre (40a, 40b) étant en contact avec la seconde portion de boîtier,
ledit joint étant dans une condition d'étanchement dans laquelle il assure un étanchement,
au moins une des caractéristiques suivantes est satisfaite :
- une hauteur (H1) du joint dans la condition d'étanchement étant au moins 1,1 fois une hauteur (H) dudit joint au repos ;
- une épaisseur (T1) du joint dans la condition d'étanchement étant au plus 0,9 fois une épaisseur (T) dudit joint au repos.

14. Procédé de fabrication d'un joint pour un assemblage connecteur électrique, optique, ou opto-électrique, le procédé comprenant la mise en forme du joint à partir d'un matériau élastomère comme un élément profilé mince comprenant :
- une base (34) ayant une surface profilée intérieure (35), adaptée à être montée en entourant un premier boîtier de connecteur, la surface profilée intérieure comprenant une portion droite (37),
- au moins une nervure (38) qui se projette vers l'intérieur depuis la portion droite (37), et
- au moins une lèvre (40a, 40b), qui se projette vers l'extérieur depuis la base, la lèvre (40a, 40b) étant au même niveau que ladite au moins une nervure (38) et ayant une surface profilée extérieure (48) adapté pour être en contact avec un second boîtier de connecteur, et opposée à la surface intérieure, ladite surface profilée extérieure comprenant deux faces (41, 42), qui vont en se rétrécissant vers un bord de lèvre (43), dans lequel un angle intérieur (α), en section transversale, entre lesdites deux faces est entre 60° et 120°, et
**caractérisé en ce que** un rapport entre une épaisseur (t) de la lèvre et une épaisseur (T) du joint est entre 0,5 et 0,7.

15. Procédé pour assembler un connecteur électrique, comprenant les étapes consistant à :
- fournir une portion de boîtier (4),
- fournir un joint (3) selon l'une quelconque des revendications 1 à 9,
- monter la surface profilée intérieure (35) pour entourer ladite portion de boîtier (4).

16. Procédé pour connecter un assemblage connecteur, comprenant les étapes consistant à :
- fournir un premier connecteur électrique (1) comprenant une première portion de boîtier et ayant un joint selon l'une quelconque des revendications 1 à 9, la surface profilée intérieure (35) étant montée pour entourer ladite première portion de boîtier (4),
- fournir un second connecteur électrique (101) comprenant une seconde portion de boîtier (102),
- assembler lesdits connecteurs pour placer le joint dans une condition d'étanchement dans laquelle il assure un étanchement, et dans lequel ladite lèvre (40a, 40b) est en contact avec la seconde portion de boîtier (102),
dans lequel une ou plusieurs des caractéristiques suivantes est satisfaite :
- une épaisseur du joint dans la condition d'étanchement est au plus 0,9 fois une épaisseur dudit joint au repos,
- une hauteur du joint dans la condition d'étanchement est au moins 1,1 fois une hauteur dudit joint au repos.
